# EUROPEAN PATENT SPECIFICATION

(11) **EP 0 338 044 B1**
(45) Date of publication and mention of the grant of the patent: **23.11.1994**
(21) Application number: 88908894.4
(22) Date of filing: 23.08.1988
(51) Int. Cl.: C08G 79/10

(54) **PREPARATION OF POLYHYDROCARBYLALUMINOXANES**
HERSTELLUNG VON POLYKOHLENWASSERSTOFFALUMINOXANEN
PREPARATION DE POLYALUMINOXANES HYDROCARBONES

(30) Priority: 31.08.1987 US 91566
(43) Date of publication of application: 25.10.1989
(73) Proprietor: THE DOW CHEMICAL COMPANY, Midland Michigan 48640-1967 (US)
(72) Inventor: SCHMIDT, Gregory, F., Midland, MI 48640 (US); CAMPBELL, Richard, E., Jr., Midland, MI 48640 (US); HUCUL, Dennis, A., Midland, MI 48640 (US)
(74) Representative: Türk, Gille, Hrabal, Leifert
(86) International application number: US8802917
(87) International publication number: WO8902453

(56) References cited:
- EP-A- 0 170 059
- DE-A- 3 240 382
- US-A- 3 454 615
- US-A- 4 544 762
- US-A- 4 664 208
- R.H. Perry, C.H. Chilton, Chemical Engineers' Handbook, 5th ed., McGraw-Hill Book Co., New York 1973, pages 16-4 and 16-5
- K.M.Hanna et al.,Journal of Colloid and Interface Science, vol. 45, No. 1, October 1973, pages 38-54

## Description

The present invention relates to the preparation of aluminoxanes, also known as polyhydrocarbylaluminoxanes. A preferred composition is polymethylaluminoxane. Polyhydrocarbylaluminoxanes are previously well-known in the art and are used as a component in the preparation of high activity homogenous Ziegler catalysts.

In USP 4,544,762 to Kaminsky, et. al. there is disclosed a preparation of aluminoxanes employing the reaction between a hydrated aluminum salt and aluminum alkyls. Particularily desirable was the reaction between hydrated aluminum sulfate and aluminum trimethyl. The reaction is conducted in an inert solvent.

EP 208,561 A2 discloses a similar process utilizing hydrated iron, magnesium, zinc and sodium salts. In each prior art process, the initial reagent was a trihydrocarbylaluminum compound. EP-A-0 170 059 disclosed the reaction of trialkyl aluminum with water absorbed in an inorganic compound selected from finely divided silica and/or alumina. No average pore diameter is given for said compound. Despite advances in the art in the preparation of aluminoxanes, previously known processes have resulted in excessively long reaction times and an inability to recycle the metal salt employed therein. Moreover, such processes required tedious comminution of the hydrated salt in order to obtain selective control of the rate at which water is released to the reaction and thus control of the molecular weight and structure of the resulting aluminoxane compound.

It would be desirable if there were provided an improved process for the preparation of polyhydrocarbylaluminoxanes that would enable the skilled artisan to obtain improved efficiency.

In addition, it would be desirable to provide an improved process that would permit the facile regeneration of the hydrating agent.

It would also be desirable if there were provided a method allowing greater control of the release of water to the reaction mixture and an ability to utilize differing reactants, particularly lower grade or oligomeric aluminoxane materials such as are presently commercially available and to produce higher molecular weight materials therefrom.

Finally, it would be desirable if there were provided a continuous process for preparation of aluminoxane.

According to the present invention there is now provided an improved process for the preparation of polyhydrocarbylaluminoxanes comprising contacting in a diluent under an inert atmosphere at temperatures of from -100°C to the reflux point of the reaction mixture a hydrocarbyl-substituted aluminum compound and a porous organic or inorganic aqueous imbiber material having a volume average pore diameter of from 40 to 2000 Angstroms selected from the group including porous organic ion exchange resins, silicas, silicates, aluminosilicates, aluminas and particulated carbons containing water imbibed or sorbed therein, separating the porous imbiber material and recovering the polyhydrocarbylaluminoxane.

Because of the greater efficiency with which water is supplied to the hydration reaction by means of the above described porous materials, the present process attains improved production economies and greater control over the resulting aluminoxane structure. Moreover, improved rates of polyhydrocarbylaluminoxane preparation are also obtained. In addition, the source of water for hydration of the precursor material may be readily regenerated by suitable techniques. Accordingly, the present process allows for recycle of such imbiber material in an economic and facile manner. Such recycling permits the process to be operated in a semi-continuous or batch manner wherein the reactants and porous imbiber material are contacted, the imbiber material is separated, then regenerated, and the procedure repeated. The process may also be operated in a truly continuous manner, wherein reagents are continuously added to a reactor operating under homogeneous, steady state conditions or in a plug flow mode, the porous imbiber material is separated and regenerated, and the regenerated porous material is continuously recharged to the process.

Finally, utilizing the present invention, it is possible to upgrade lower molecular weight polyhydrocarbylaluminoxanes or other precursor materials to obtain higher molecular weight forms thereof or differing molecular structures thereof.

By the term "polyhydrocarbylaluminoxane precursor" is meant any hydrocarbyl substituted aluminum compound, which may be monomeric, oligomeric or polymeric, optionally containing inert substituents. Examples include trihydrocarbylaluminum compounds, preferably having from 1 to 12 carbons in each hydrocarbyl group, as well as polyhydrocarbylaluminoxanes having differing molecular weight or structure from that desired according to the present invention, and mixtures thereof. Preferred polyhydrocarbylaluminoxane precursors for use according to the present invention are trialkylaluminum compounds having from 1 to 4 carbons in each alkyl group. Particularly preferred is trimethylaluminum.

Suitable porous aqueous imbiber materials for use according to the present invention include the porous organic ion exchange resins, e.g. macroporous resins such as those available from The Dow Chemical Company under the trade name Dowex® or from Rohm and Haas Company under the trade name Amberlite®, etc. and porous inorganic materials such as silicas, silicates, aluminosilicates, aluminas and particulated carbons, such as acetylene black or other suitable porous carbon material. A particularly desirable porous aqueous imbiber material is porous, high surface area silica or alumina.

Preferred porous aqueous imbiber materials are compositions having an average pore diameter from 100 to 1,000 Angstroms. In addition, it is highly desirable to employ such compositions having a total surface area from 1 m²/g to 1200 m²/g. Preferably from 5 m²/g to 500 m²/g. An especially preferred aqueous imbiber material is capable of regeneration to remove residual contaminants and to replace water consumed by the reaction. A suitable regeneration technique is to wash the used porous imbiber material with a suitable solvent to remove contaminants or to heat the material to a suitable temperature, e.g. calcine the material, and then to contact the material with water or an aqueous acid solution to replace consumed water.

In the process, the starting reactant is contacted with the porous aqueous imbiber material containing sorbed water in any suitable manner. The polyhydrocarbylaluminoxane precursor and aqueous imbiber material are combined in an inert liquid. Preferred inert liquids are C₆₋₁₂ aliphatic or aromatic hydrocarbons or mixtures thereof. Specific examples include toluene, hexane, heptane, decahydronaphthalene, etc. Most preferred diluents are those capable of forming a homogeneous solution of the resulting aluminoxane . One preferred example is toluene. The inert liquid is a compound or a mixture of compounds at least one of which has a boiling point above that of the polyhydrocarbylaluminoxane precursor compound. Such a selection of diluents allows the operator to distill the resultant product mixture and remove residual amounts of low boiling precursor leaving the resulting aluminoxane in the inert liquid.

The polyhydrocarbylaluminoxane precursor and porous aqueous imbiber material are contacted under an inert atmosphere such as nitrogen, argon, etc. at suitable reaction temperatures. Suitable temperatures are those from -100°C to the reflux point of the reaction mixture, preferably from -20°C to about 50°C. Where a trihydrocarbylaluminum compound is employed as the polyhydrocarbylaluminoxane precursor, it may be first dissolved or dispersed in an inert diluent and the porous aqueous imbiber material having water sorbed therein added thereto accompanied by mechanical stirring and optional heating or cooling. Alternatively, the trihydrocarbylaluminum reactant may be added to a suspension of the porous aqueous imbiber material. Care should be exercised to avoid excessive heat generation. Cooling techniques, the use of a low boiling refluxing solvent and the slow addition of the various reactants may all be employed.

Where it is desired to employ an existing form of polyhydrocarbylaluminoxane as the precursor, a small quantity of a trihydrocarbylaluminum compound is also desirably present. The trihydrocarbylaluminum compound may be found already present in a minor concentration in polyhydrocarbylaluminoxane prepared utilizing prior art techniques, or may be intentionally added thereto prior to the reaction.

The reaction is allowed to continue with stirring for a sufficient time to enable the desired degree of conversion of the polyhydrocarbylaluminoxane precursor. Suitable contacting times are on the order of several minutes to several hours.

The aluminoxane, which normally is in homogeneous solution, may be employed as is or may be recovered and dispersed or slurried in an inert diluent. The latter form is particularly desirable in the preparation of olefin polymers according to the well-known "slurry" process. The polyhydrocarbylaluminoxane product may be recovered by simply separating the porous aqueous imbiber material and devolatilizing the inert diluent.

The present process allows the preparation of polyhydrocarbylaluminoxanes in greater effeciency, purity and convenience than previously known processes. Moreover the present process results in greater control over the molecular weight and structure of the final product due the uniformity in which water is supplied to the reaction. It is this latter feature that permits the operator to employ previously produced aluminoxanes as precursor materials to form polyhydrocarbylaluminoxanes having altered molecular weight and/or structure according to the present invention.

The following Examples further illustrate the present invention.

### Example 1

A reaction vessel was charged with nitrogen and then with 1,750 ml of purified toluene and 800 ml of a 2.0 Molar trimethylaluminum solution in toluene. The reaction mixture was cooled to -78°C and 58 grams of silica having a surface area of 87 m²/g and a volume average pore diameter of about 600 Angstroms which had been previously impregnated with 28.8 ml of water were added accompanied by stirring. After 30 minutes, the reaction mixture was allowed to warm to room temperature. Three and one half hours after the reaction was initiated, a heating mantle was fitted to the reactor and the reaction mixture heated to reflux and maintained at reflux for 90 minutes.

The resulting product mixture was then cooled to room temperature and the clear liquid solution decanted from the silica spheres. Volatile reaction products were removed by vacuum distillation. Yield of solid polymethylaluminoxane was 43.3 grams, 46% of theory.

### Example 2

The reaction conditions of Example 1 were substantially repeated utilizing 9.5 g of high surface area alumina having a surface area of 15 m²/g and an average pore diameter of 1700 Angstroms. The alumina was impregnated with 4.75 g of water.

The reaction was conducted in a solvent mixture comprising 200 ml of hexane and 150 ml of heptane containing 0.4 moles of trimethylaluminum as the aluminoxane precursor. The alumina spheres were added under nitrogen atmosphere with stirring at room temperature. After 18 hours reaction the aluminoxane was recovered. No gel formation was observed thereby indicating controlled release of water to the reaction.

## Claims

1. A process for the preparation of polyhydrocarbylaluminoxanes comprising contacting in a diluent under an inert atmosphere at temperatures of from -100°C to the reflux point of the reaction mixture a hydrocarbyl-substituted aluminum compound and a porous organic or inorganic aqueous imbiber material having a volume average pore diameter of from 40 to 2000 Angstroms selected from the group including porous organic ion exchange resins, silicas, silicates, aluminosilicates, aluminas and particulated carbons containing water imbibed or sorbed therein, separating the porous imbiber material and recovering the polyhydrocarbylaluminoxane.

2. The process according to claim 1, wherein the polyhydrocarbyl-substituted aluminum compound is selected from trihydrocarbylaluminum compounds having from 1 to 12 carbon atoms in each hydrocarbyl group.

3. The process according to claim 1 or 2, wherein the hydrocarbyl-substituted aluminum compound is a polyhydrocarbylaluminoxane having a molecular weight or structure different from that prepared by the process.

4. The process according to claim 2, wherein the trihydrocarbylaluminum compound is trimethylaluminum.

5. The process according to any of claims 1 to 4, wherein the porous aqueous imbiber material is silica or alumina having a total surface area of from 1 to 1200 m²/g.

6. The process according to any of claims 1 to 5, wherein the inert diluent is toluene.

7. A continuous process according to any of claims 1 to 6, wherein after preparation of the polyhydrocarbylaluminoxane, the porous imbiber material is recovered, regenerated and reused to prepare a polyhydrocarbylaluminoxane.

8. The process of claim 1 wherein the aqueous imbiber has a volume average pore diameter from 100 to 2000 Angstroms.

## Patentansprüche

1. Verfahren zur Herstellung von Polyhydrocarbylaluminoxanen, das umfaßt das Kontaktieren einer Hydrocarbylsubstituierten Aluminiumverbindung mit einem porösen organischen oder anorganischen wasserhaltigen Imbibierungsmaterial mit einem volumendurchschnittlichen Porendurchmesser von 40 bis 2000 Å, ausgewählt aus der Gruppe, die umfaßt poröse organische Ionenaustauscherharze, Siliciumdioxide, Silicate, Aluminosilicate, Aluminiumoxide und teilchenförmige Kohlenstoffe, die imbibiertes Wasser oder darin sorbiertes Wasser enthalten, in einem Verdünnungsmittel in einer inerten Atmosphäre bei Temperaturen von - 100°C bis zur Rückflußtemperatur der Reaktionsmischung, das Abtrennen des porösen Imbibierungsmaterials und die Gewinnung (Abtrennung) des Polyhydrocarbylaluminoxans.

2. Verfahren nach Anspruch 1, worin die Polyhydrocarbylsubstituierte Aluminiumverbindung ausgewählt wird aus Trihydrocarbylaluminium-Verbindungen mit 1 bis 12 Kohlenstoffatomen in jeder Hydrocarbylgruppe.

3. Verfahren nach Anspruch 1 oder 2, worin die Hydrocarbyl-substituierten Aluminiumverbindung ein Polyhydrocarbylaluminoxan mit einem Molekulargewicht oder einer Struktur ist, die von derjenigen verschieden ist, wie sie nach dem Verfahren erhalten wird.

4. Verfahren nach Anspruch 2, worin die Trihydrocarbylaluminium-Verbindung Trimethylaluminium ist.

5. Verfahren nach einem der Ansprüche 1 bis 4, worin das poröse wasserhaltige Imbibierungsmaterial Siliciumdioxid oder Aluminiumoxid mit einer Gesamtoberflächengröße von 1 bis 1200 m²/g ist.

6. Verfahren nach einem der Ansprüche 1 bis 5, worin das inerte Verdünnungsmittel Toluol ist.

7. Kontinuierliches Verfahren nach einem der Ansprüche 1 bis 6, worin nach der Herstellung des Polyhydrocarbylaluminoxans das poröse Imbibierungsmaterial abgetrennt, regeneriert und wiederverwendet wird zur Herstellung eines Polyhydrocarbylaluminoxans.

8. Verfahren nach Anspruch 1, worin das wasserhaltige Imbibierungsmaterial einen volumendurchschnittlichen Porendurchmesser von 100 bis 2000 Å hat.

## Revendications

1. Procédé de préparation de polyhydrócarbylaluminoxanes, comprenant le fait de mettre en contact, dans un diluant, sous atmosphère inerte, à une température valant de -100°C au point de reflux du mélange réactionnel, un composé de l'aluminium à substituants hydrocarbyles et une substance poreuse organique ou minérale, imprégnable d'un liquide aqueux, dont les pores ont un diamètre moyen en volume de 40 à 2000 angströms et qui est choisie dans le groupe comprenant les résines organiques poreuses échangeuses d'ions, les silices, les silicates, les aluminosilicates, les alumines et les charbons particulaires, imprégnée d'eau ou ayant absorbé ou adsorbé de l'eau, le fait de séparer la substance poreuse imprégnable et le fait de récupérer le polyhydrocarbylaluminoxane.

2. Procédé conforme à la revendication 1, dans lequel le composé de l'aluminium à substituants hydrocarbyles est choisi parmi les composés de type trihydrocarbyl-aluminium dont chaque groupe hydrocarbyle comporte de 1 à 12 atomes de carbone.

3. Procédé conforme à la revendication 1 ou 2, dans lequel le composé de l'aluminium à substituants hydrocarbyles est un polyhydrocarbylaluminoxane dont la masse moléculaire ou la structure est différente de celle du composé préparé selon le procédé.

4. Procédé conforme à la revendication 2, dans lequel le composé de type trihydrocarbyl-aluminium est du triméthyl-aluminium.

5. Procédé conforme à l'une des revendications 1 à 4, dans lequel la substance poreuse imprégnable d'un liquide aqueux est de la silice ou de l'alumine dont l'aire spécifique totale vaut de 1 à 1200 m²/g.

6. Procédé conforme à l'une des revendications 1 à 5, dans lequel le diluant inerte est du toluène.

7. Procédé continu conforme à l'une des revendications 1 à 6, dans lequel, après la préparation du polyhydrocarbylaluminoxane, on récupère la substance poreuse imprégnable, on la régénère et on l'emploie à nouveau pour préparer un polyhydrocarbylaluminoxane.

8. Procédé conforme à la revendication 1, dans lequel le diamètre moyen en volume des pores de la substance imprégnable d'un liquide aqueux vaut de 100 à 2000 angströms.
